# FASCICULE DE BREVET EUROPEEN

(11) **EP 0 410 843 B1**
(45) Date de publication et mention de la délivrance du brevet: **26.01.1994**
(21) Numéro de dépôt: 90402025.2
(22) Date de dépôt: 13.07.1990
(51) Int. Cl.: F16L 33/24

(54) **Embout de raccordement pour tuyau de matière synthétique et procédé de montage**
Verbindungsstück für Kunststoffrohre und Montageverfahren
Connection joining piece for plastic pipes and mounting method

(30) Priorité: 24.07.1989 FR 8909934
(43) Date de publication de la demande: 30.01.1991
(73) Titulaire: Anessi, Jacques, F-38170 Seyssins (FR)
(72) Inventeur: Anessi, Jacques, F-38170 Seyssins (FR)
(74) Mandataire: Derambure, Christian

(56) Documents cités:
- DE-C- 810 335
- DE-U- 7 008 119
- FR-A- 411 110
- FR-A- 834 185
- FR-A- 1 224 248
- FR-A- 2 230 924
- US-A- 3 575 447

## Description

L'invention concerne un embout de raccordement pour tuyau de matière synthétique telle que le PVC ou autre.

Dans le domaine général de la plomberie et du transport de l'eau courante, on utilise déjà divers types de tuyaux en matières synthétiques (installations sanitaires, tuyaux d'arrosage, ...). Le problème général qui se pose dans ces applications, est de pouvoir raccorder l'extrémité libre d'un tuyau au reste de l'installation, notamment à un autre tuyau ou à une alimentation en eau, ou à un autre dispositif de plomberie ... Il est donc nécessaire de munir l'extrémité libre de ce tuyau d'un embout de raccordement compatible avec le reste de l'installation et procurant un raccord étanche. Par ailleurs, compte tenu du fait que la majorité des applications de tels tuyaux sont des applications domestiques, il est souhaitable que ces embouts de raccordement puissent être montés facilement, sans nécessiter d'outil spécial et soit également démontables.

Les tuyaux de matière synthétique telle que le PVC réticulé pour le transport de l'eau chaude ou de l'eau froide présentent l'avantage d'un faible coût, d'une absence de corrosion, d'une facilité de manipulation ... Du point de vue mécanique, ils sont "semi-rigides", c'est-à-dire qu'ils peuvent être déformés plastiquement en flexion, mais concervent naturellement la forme qu'on leur donne. Ils présentent des surfaces extérieure et intérieure dures mais ayant une certaine plasticité.

On connaît déjà des embouts de raccordement destinés à de tels tuyaux en matière synthétique.

Un premier type connu d'embout de raccordement comporte une pièce à collet formant un tube interne destiné à être introduit à l'extrémité libre du tuyau et un collier ou manchon de serrage destiné à être placé à l'extérieur de ladite extrémité libre du tuyau pour la serrer contre le tube interne de la pièce à collet. Un écrou femelle rotatif est monté flottant contre le collet et est maintenu contre ce collet par le collier ou manchon de serrage. Ce collier ou manchon de serrage est serti sur le tuyau à l'aide d'une pince spéciale. De la sorte, un tel embout de raccordement nécessite un outil spécial pour son montage, et n'est pas démontable. Il est donc relativement difficile à mettre en oeuvre.

On connaît également un autre type d'embout de raccordement constitué d'une pièce à collet formant un tube interne destiné à être introduit à l'extrémité libre du tuyau et une bague de serrage à être placée à l'extérieur de ladite extrémité libre du tuyau pour la serrer contre le tube interne de la pièce à collet. Le tube interne présente une pluralité de nervures circulaires en saillie, et la bague de serrage présente des gorges circulaires de forme correspondante. La bague de serrage est fendue et a un diamètre intérieur supérieur au diamètre extérieur du tuyau lorsqu'elle n'est pas serrée contre ce tuyau. La pièce à collet forme une portée tronconique coopérant avec la bague de serrage et comporte un filetage extérieur coopérant avec un écrou engagé préalablement sur le tuyau. Lorsqu'on visse ledit écrou sur le filetage de la pièce à collet, la bague de serrage est emprisonnée entre les portées tronconiques de la pièce collet et de l'écrou et vient se serrer contre le tuyau qui s'applique contre le tube interne, le diamètre de la bague de serrage étant alors diminué. Cet embout de raccordement présente l'inconvénient majeur qu'il est nécessaire de prévoir un encombrement radial important pour le montage de la bague de serrage qui a un diamètre nominal supérieur à celui du tuyau. De plus, il est nécessaire de prévoir un filetage extérieur à la pièce à collet. Dès lors, pour un diamètre de tuyau donné, il n'est pas possible en pratique avec de tels embouts de raccordement d'obtenir de façon simple à l'extrémité de l'embout un écrou dont le diamètre du taraudage est relativement faible et correspond par exemple au "pas du gaz", c'est-à-dire aux normes correspondantes dans le domaine de la plomberie. On constate en effet que le filetage mâle prévu à l'extérieur de la pièce à collet est déjà lui-même à un diamètre équivalent ou supérieur au diamètre normalisé. Il faut donc se résoudre soit à imposer un format spécial pour de tels tuyaux, soit à prévoir en aval de l'embout de raccordement une série de raccords permettant l'adaptation au bon diamètre, ce qui nuit bien évidemment à la facilité d'installation et au prix de revient de l'ensemble. Egalement et surtout avec un tel embout de raccordement, il n'est pas possible de prévoir un écrou rotatif femelle monté sur l'embout lui-même. Il est donc aisément compréhensible que sans écrou monté flottant à l'extrémité du tuyau, le raccordement sera beaucoup plus délicat, voire même impossible dans certains cas puisqu'il est alors nécessaire de prévoir un filetage mâle sur l'embout de raccordement et un écrou rotatif et flottant sur l'autre partie de l'installation à raccorder.

On connaît aussi (FR-A-2 230 924) un raccord incorporant une bague biconique déformable et une douille filetée dans laquelle une busette à renflement est insérée. Les dessins de ce document montrent une busette formant une pièce à collet et un tube interne introduit à l'extrémité libre du tuyau, la bague biconique étant placée à l'extérieur de cette extrémité libre. La busette est insérée dans un logement de la douille ou d'un écrou à filetage mâle, et un écrou à taraudage femelle chevauche la bague biconique pour coopérer avec ce filetage mâle pour comprimer la bague biconique effectuant le serrage du tuyau sur la busette. La busette est pourvue d'un crantage circulaire ou hélicoïdale. Mais cette douille ne constitue pas un raccord flottant à taraudage femelle au diamètre normalisé minimum par rapport au diamètre du tuyau. Par ailleurs, dans le cas de l'eau chaude ou plus généralement à haute température, le serrage procuré est insuffisant.

L'invention vise donc à remédier aux inconvénients précités de l'état de la technique et a pour objet un embout de raccordement pour tuyau de matière synthétique qui peut être monté aisément sans nécessiter d'outil spécial, qui est démontable aussi aisément, et qui comporte un écrou rotatif monté flottant présentant un taraudage femelle dont le diamètre est aussi faible que possible, et notamment qui correspond au diamètre normalisé.

Un autre objet de l'invention est de proposer un tel embout de raccordement qui puisse être monté et démonté successivement à plusieurs reprises sans être pour autant détérioré et en conservant à chaque reprise la même efficacité et les mêmes qualités d'étanchéité et de fiabilité.

Un autre objet de l'invention est de proposer un tel embout de raccordement qui puisse être utilisé à haute température (eau chaude ou chauffage) en conservant ses caractéristiques d'étanchéité et de fiabilité.

Egalement, un objet de l'invention est de proposer un tel embout propre à être utilisé avec des tuyaux synthétiques durs et semi-rigides, par exemple en PVC réticulé.

Simultanément, l'embout de raccordement selon l'invention doit assurer une parfaite étanchéité de façon fiable et durable et être d'un prix de revient aussi faible que possible.

Pour ce faire l'invention concerne un embout de raccordement destiné à être monté sur un tuyau de matière synthétique comportant une pièce formant un tube interne destiné à être introduit à l'extrémité libre du tuyau, une bague de serrage globalement cylindrique biconique destinée à être placée à l'extérieur de ladite extrémité libre du tuyau, et un écrou rotatif comportant un taraudage de raccordement femelle et s'engageant à l'extérieur du tuyau en chevauchant la pièce et la bague de serrage pour la coincer contre ladite pièce et la serrer contre le tube interne lors du serrage de l'écrou sur un embout mâle correspondant ; le tube interne de la pièce étant pouvu d'un filetage extérieur ; la bague de serrage étant en forme de manchon fermé de diamètre correspondant audit filetage extérieur ; le diamètre extérieur du filetage du tube interne étant supérieur au diamètre intérieur du tuyau; la pièce comportant des moyens de coopération avec un outil de vissage de la pièce dans l'extrémité libre du tuyau serré entre ladite bague de serrage et ledit tube interne ; l'écrou rotatif comportant une porté cylindrique coopérant, au jeu de rotation de l'écrou près, avec la surface extérieure cylindrique de la bague de serrage et avec une surface extérieure cylindrique de la pièce; et la portée cylindrique interne de l'écrou rotatif en regard de la bague de serrage et de la pièce étant prolongée par le taraudage de raccordement femelle qui est au diamètre normmalisé minimum par rapport au diamètre du tuyau. Selon l'invention, l'embout comporte un écrou rotatif comportant un taraudage de raccordement femelle, cet écrou s'engageant à l'extérieur du tuyau en chevauchant la bague de serrage et la pièce à collet pour coincer ladite bague de serrage contre ladite pièce à collet lors du serrage de l'écrou sur un embout mâle correspondant solidaire d'une autre partie de l'installation à raccorder. Selon l'invention, la bague de serrage est en forme de manchon cylindrique de révolution fermée de diamètre constant et n'est donc pas fendue. La surface extérieure de la bague de serrage est lisse et cylindrique de révolution et coopère avec une portée cylindrique de révolution lisse interne de l'écrou rotatif pour permettre la libre rotation de cet écrou autour de la bague de serrage.

Les diamètres respectifs de la bague de serrage et du tube interne sont tels que lors du vissage dudit tube interne de la pièce à collet dans l'extrémité libre du tuyau préalablement pourvu de la bague de serrage, le tuyau est emprisonné à force et coincé entre la bague de serrage et le tube interne. Pour éviter que les filets de la bague de serrage et du tube interne ne coupent le tuyau, et pour faciliter la pose de l'embout, ces filets sont arrondis ou aplatis.

La bague de serrage a ses bords circulaires extrêmes chanfreinés du côté de l'écrou et du côté de la pièce à collet, l'écrou et la pièce à collet définissant des portées tronconiques de forme correspondante aux et coopérant par contact avec lesdits chanfreins de la bague de serrage lors du serrage de l'écrou sur l'embout mâle correspondant de l'autre partie de l'installation à raccorder. Ainsi, lors du serrage, les portées tronconiques et les chanfreins ont tendance à maintenir la bague de serrage appliquée contre le tuyau.

Lesdits moyens de coopération de la pièce à collet avec un outil de vissage sont constitués du fait que la surface interne du tube interne de la pièce à collet à une section droite transversale polygonale, notamment hexagonale ou carrée, de façon à pouvoir coopérer avec un outil de vissage mâle à plusieurs pans, notamment à six ou quatre pans.

L'invention concerne également un procédé de montage d'un tel embout de raccordement caractérisé en ce que l'on visse la bague de serrage autour de l'extrémité libre du tuyau, puis on visse la pièce à collet en engageant son tube interne dans l'extrémité libre du tuyau, cette extrémité libre étant serrée entre le tube interne de la pièce à collet et la bague de serrage. Selon l'invention, on engage préalablement sur le tuyau un écrou rotatif comportant un taraudage de raccordement femelle.

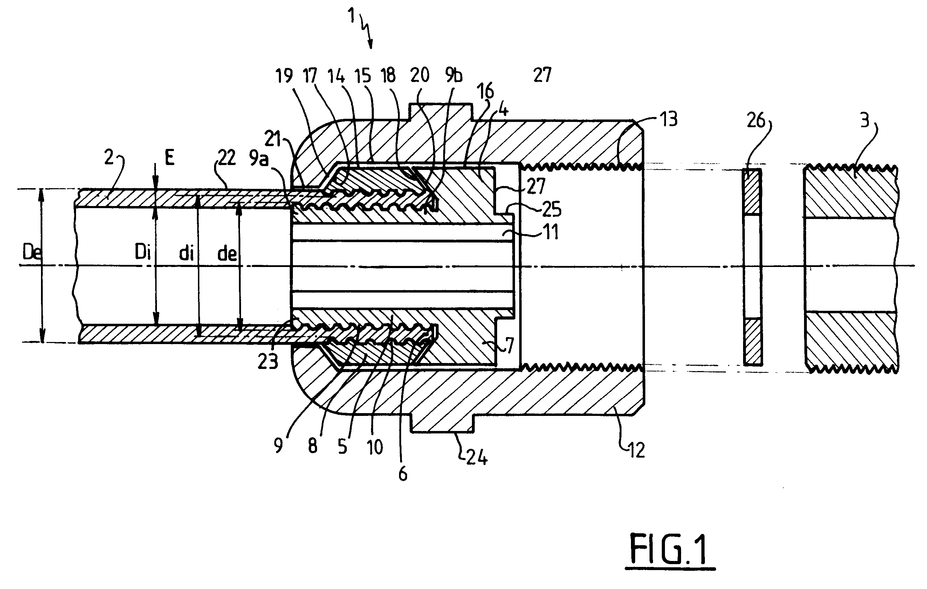

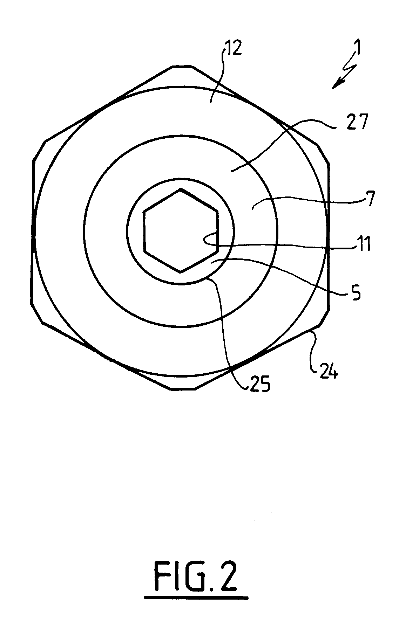

D'autres caractéristiques et avantages de l'invention apparaîtront à la lecture de la description suivante se référant aux figures annexées dans lesquelles :
. La figure 1 est une vue en coupe axiale d'un embout de raccordement selon l'invention.
. La figure 2 est une vue de droite de la figure 1.

L'embout 1 de raccordement selon l'invention est destiné à être monté sur un tuyau 2 de matière synthétique telle que le PVC réticulé ou autre. Un tel embout 1 permet le raccordement du tuyau 2 sur un embout 3 correspondant d'une autre partie de l'installation à raccorder, ledit embout 3 correspondant ne faisant pas partie intégrante de la présente invention.

L'embout 1 de raccordement selon l'invention comporte une pièce à collet 4 formant un tube interne 5 destiné à être introduit à l'extrémité libre 6 du tuyau 2. La pièce à collet 4 est donc formée d'un tube interne 5 creux destiné à être emmanché à l'extrémité libre 6 du tuyau 2, et d'un collet 7 s'étendant en saillie radialement par rapport au tube interne 5 et à l'extrémité libre 6 du tuyau 2, à l'extérieur de ce tuyau 2. L'embout 1 de raccordement selon l'invention comporte également une bague de serrage 8 destinée à être placée à l'extérieur de ladite extrémité libre 6 du tuyau 2 pour la serrer contre le tube interne 5 de la pièce à collet 4. Ainsi, le tube interne 5 rigide de la pièce à collet 4 forme une contrepartie à la bague de serrage 8 de façon a permettre le serrage du tuyau 2 entre ladite bague 8 et le tube interne 5 sans modificatin du diamètre interne du tuyau 2.

Selon l'invention, le tube interne 5 de la pièce à collet 4 est pourvu d'un filetage extérieur 9, la bague de serrage 8 est pourvue d'un taraudage intérieur 10 correspondant audit filetage extérieur 9 du tube interne 5, et la pièce à collet 4 comporte des moyens 11 de coopération avec un outil de vissage de cette pièce à collet dans l'extrémité libre du tuyau 2 serrée entre ladite bague de serrage 8 et ledit tube interne 5.

Un embout 1 du raccordement selon l'invention comporte par ailleurs un écrou rotatif 12 comportant un taraudage de raccordement femelle 13 et s'engageant à l'extérieur du tuyau 2 en chevauchant la bague de serrage 8 et la pièce à collet 4 pour coincer ladite bague de serrage 8 contre ladite pièce à collet 4, notamment contre le collet 7 de cette pièce à collet 4 lors du serrage de l'écrou 12 sur un embout mâle 3 correspondant d'une autre partie de l'installation à laquelle l'embout 1 selon l'invention doit être raccordé.

Selon l'invention, la bague de serrage 8 est en forme de manchon globalement cylindrique de révolution, fermé, et de diamètre constant. Ainsi, la bague de serrage 8 n'est pas fendue. La surface extérieure 14 de la bague de serrage 8 est lisse et globalement cylindrique de révolution, et coopère avec une portée 15 cylindrique de révolution, lisse, interne de l'écrou rotatif 12, pour permettre la libre rotation de l'écrou 12 autour de la bague de serrage 8. De même, la surface extérieure 16 du collet 7 de la pièce à collet 4 est lisse et cylindrique de révolution et coopère avec cette même portée 15 cylindrique lisse interne de l'écrou rotatif 12, portée 15 qui est prolongée du côté de la pièce à collet 4 sur toute sa longueur axiale. Le diamètre extérieur de la surface extérieure 14 de la bague de serrage 8 et le diamètre extérieur de la surface extérieure 16 du collet 7 sont au moins sensiblement égaux l'un à l'autre, et, au jeu près, au diamètre intérieur de la portée 15 interne de l'écrou 12, de sorte que l'écrou 12 peut tourner librement autour de la bague de serrage 8 et du collet 7. Les deux surfaces extérieures 14, 16 de la bague de serrage 8, respectivement du collet 7, viennent donc en prolongement l'une de l'autre, lorsque l'embout 1 est placé sur le tuyau 2.

Selon un mode particulier de l'invention, la différence entre le diamètre intérieur dᵢ du taraudage interne 10 de la bague de serrage 8 et le diamètre extérieur dₑ du filetage 9 du tube interne 5 est inférieure à l'épaisseur E du tuyau à serrer 2, de sorte que ce tuyau 2 est coincé et comprimé entre la bague de serrage 8 et le tube interne 5 (figure 1).

Plus précisément, le diamètre intérieur dᵢ du taraudage 10 de la bague de serrage 8 est inférieur au diamètre externe Dₑ du tuyau 2. Et le diamètre extérieur dₑ du filetage 9 du tube interne 5 est supérieur au diamètre intérieur Dᵢ du tuyau 2.

Selon un mode particulier de l'invention, ledit filetage extérieur 9 du tube interne 5 et ledit taraudage intérieur 10 de la bague de serrage 8 ont des filets arrondis ou aplatis pour ne pas couper le tuyau 2 lors du vissage de la bague de serrage 8 et/ou de la pièce à collet 4.

Selon l'invention, la bague de serrage 8 est en forme de manchon cylindrique fermé et elle est éventuellement chanfreinée, c'est-à-dire que ses bords 17, 18 sont chanfreinés, c'est-à-dire définissent des surfaces tronconiques du côté de l'écrou 12 et du côté de la pièce à collet 4. L'écrou 12 et la pièce à collet 4 définissent des portées tronconiques 19, 20 de forme correspondante aux et coopérant par contact avec les bords chanfreinés 17 respectivement 18 de la bague de serrage 8 lors du serrage de l'écrou 12 sur l'embout 3 correspondant de la partie de l'installation à laquelle l'embout 1 selon l'invention doit être raccordé. Ainsi, la bague de serrage 8 est biconique et sa longueur axiale va en diminuant de l'intérieur vers l'extérieur. Autrement dit, la bague de serrage 8 a une section droite transversale selon un plan radial de forme sensiblement trapézoïdale, le petit côté du trapèze correspondant à la surface extérieure 14, le grand côté correspondant au taraudage 10.

L'écrou rotatif 12 comporte une portée cylindrique interne lisse 21 coopérant par contact avec la surface extérieure 22 du tuyau 2. Le diamètre intérieur de cette portée 21 correspond, au jeu près, au diamètre extérieur Dₑ de la surface extérieur 22 du tuyau 2. A partir de cette portée 21 de l'écrou 12, celui-ci comporte la portée tronconique 19 coopérant par contact avec le bord chanfreiné 17 correspondant de la bague de serrage 8. Cette portée tronconique 19 a son angle au sommet orienté vers l'intérieur du tuyau 2 axialement et va en s'évasant radialement vers l'extérieur jusqu'à la portée cylindrique 15 qui coopère avec les surfaces extérieures 14, 16 de la bague de serrage 8 et du collet 7. Cette portée tronconique 19 relie donc les portées cylindriques 21 et 15 de l'écrou 12 qui sont de diamètres différents. L'autre bord 18 de la bague de serrage 8 est également chanfreiné de façon symétrique au bord 17, et coopère avec la portée tronconique 20 du collet 7 qui va a son angle au sommet orienté vers l'extérieur du tuyau axialement c'est-à-dire vers l'embout 3 auquel l'embout 1 selon l'invention doit être raccordé. La porté tronconique 20 relie la surface extérieure 16 du collet 7 au tube interne 5. Lors du serrage de l'écrou 12 contre l'embout 3 correspondant de la partie de l'installation à laquelle l'embout 1 doit être raccordé, la bague de serrage 8 est donc coincée entre les portées tronconiques 19 et 20 de l'écrou 12 et du collet 7, portées tronconiques qui ont tendance à améliorer et à maintenir l'effet de serrage radial vers l'intérieur de cette bague de serrage 8 contre le tuyau 2 et le tube interne 5.

Les filets 9a, voisins de l'extrémité libre 23 du tube interne 5 de la pièce à collet 4 ont un diamètre extérieur plus faible que les filets 9b voisins de la portée 20 tronconique de la pièce à collet 4 contre laquelle la bague de serrage 8 et l'extrémité libre 6 du tuyau 2 viennent en butée lors du serrage. Ainsi, les filets 9 du tube interne 5 ont un diamètre qui va légèrement en s'agrandissant de l'extrémité libre 23 du tube interne 5 jusqu'au collet 7 et ce de façon à faciliter l'introduction du tube interne 5 à l'intérieur de l'extrémité libre 6 du tuyau 2.

Lesdits moyens 11 de coopération de la pièce à collet 4 avec un outil de vissage sont constitués du fait que la surface interne 11 du tube interne 5 de la pièce à collet 4 a une section droite transversale polygonale, notamment hexagonale ou carrée, de façon à pouvoir coopérer avec un outil de vissage mâle plusieurs pans, notamment à 6 ou 4 pans (figure 2). Pour visser la pièce à collet 4 à l'intérieur de l'extrémité libre 6 du tuyau 2, il suffit donc d'introduire une clef à pans à l'intérieur du tube interne 5.

La portée 15 de l'écrou 12 coopérant avec les surfaces extérieures 14, 16 de la bague de serrage 8 et du collet 7 est prolongée par le taraudage femelle 13 de l'écrou 12 destiné à coopérer avec un filetage correspondant de l'embout 3 mâle auquel le tuyau 2 doit être raccordé. L'écrou 12 monté rotatif grâce à ses portées cylindriques 21, 15 autour du tuyau 2, de la bague de serrage 8 et du collet 7, est pourvu d'une couronne extérieure à pans 24, notamment hexagonale ou carrée, permettant le serrage par vissage de l'écrou 12 sur l'embout 3 mâle correspondant à l'aide d'une clef plate ou similaire.

Le collet 7 de la pièce à collet 4 définit avantageusement un épaulement 25 cylindrique permettant de recevoir et de maintenir un joint 26 d'étanchéité contre la surface extrême libre 27 radiale du collet 7.

L'invention concerne également un procédé de montage d'un embout selon l'invention, caractérisé en ce que l'on visse la bague de serrage 8 autour de l'extrémité libre 6 du tuyau 2, puis on visse la pièce à collet 4 dans l'extrémité libre du tuyau 2 serrée entre le tube interne 5 de la pièce à collet 4 et la bague de serrage 8. Lorsque l'on visse la bague de serrage 8, le tube interne 5 n'est pas encore placé dans l'extrémité libre 6 du tuyau 2. Par conséquent, ce vissage se fait sans difficulté, le tuyau 2 se déformant légèrement par rétrécissement. Pour introduire le tube interne 5 de la pièce à collet 4 dans l'extrémité libre 6 du tuyau 2, on utilise une clef à pans introduite dans le tube interne 5 pour coopérer avec la surface interne 11 à pans, et l'on tourne dans le sens du vissage la pièce à collet 4. Ce faisant, le tuyau 2 est comprimé et coincé entre la bague de serrage 8 et le tube interne 5. On continue le vissage jusqu'à ce que la portée tronconique 20 du collet 7 vienne en contact avec le bord chanfreiné correspondant 18 de la bague de serrage 8.

Préalablement au vissage de la bague de serrage 8 sur le tuyau 2, on a engagé l'écrou rotatif 12 sur le tuyau 2. Pour procéder au raccordement, il suffit donc de rapprocher cet écrou 12 de la bague de serrage 8 de la pièce à collet 4 montée sur le tuyau 2 jusqu'à ce qu'à ce que sa portée tronconique 19 vienne en contact ave le bord chanfreiné 17 de la bague de serrage 8 correspondant, la portée cylindrique 15 de l'écrou 12 venant tourillonner autour des surfaces extérieures 14, 16 de la bague de serrage 8 et du collet 7. On peut donc alors librement tourner l'écrou 12 après avoir introduit le joint 26 pour le visser sur l'embout mâle 3 correspondant de la partie de l'installation auquel on souhaite raccorder le tuyau 2.

L'embout de raccordement 1 selon l'invention peut bien évidemment être démonté du tuyau 2 en effectuant les opérations mentionnées ci-dessus en sens inverse. Il suffit en effet d'introduire la clef à pans dans le tube interne 5 et de dévisser la pièce à collet 4, puis la bague de serrage 8 pour retirer l'embout 1 de raccordement selon l'invention. Ce faisant, aucune détérioration de la bague de serrage 8, ou de la pièce à collet 4, ou de l'écrou 12 n'est à craindre. L'embout 1 de raccordement selon l'invention peut donc être immédiatement réutilisé avec la même efficacité.

Par ailleurs, l'invention permet d'obtenir sur l'écrou 12 un taraudage 13 de diamètre minimum à diamètre de tuyau 2 constant. Ainsi, on peut s'adapter sans difficulté aux normes en vigueur. Par exemple, pour un tuyau 2 dont le diamètre interne Dᵢ était de l'ordre de 13 mm, le diamètre externe Dₑ était de l'ordre de 16 mm, le diamètre intérieur du taraudage 13 a pu être aisément réalisé de l'ordre de 19 mm, correspondant au diamètre extérieur normalisé de 23 mm.

Enfin, il faut noter que l'écrou 12 rotatif n'a aucune fonction de maintien en place de la pièce à collet 4 et/ou de la bague de serrage 7 qui sont maintenus et fixés dès que la pièce à collet 4 a été vissée dans le tuyau 2 entouré de la bague de serrage 8. Dès lors, lorsque l'on visse l'écrou 12 sur l'embout 3 mâle correspondant, il n'y a aucun risque de mouvement intempestif de la bague de serrage 8 et/ou de la pièce à collet 4, ce qui facilite grandement la pose et l'efficacité du raccord du point de vue de l'étanchéité, les différentes pièces étant parfaitement placées les unes par rapport aux autres. Au contraire, lorsque l'écrou 12 est serré contre l'embout 3, il participe avec le collet 7 au serrage et au maintien de ce serrage de la bague 8 contre le tuyau 2 et le tube interne 5, du fait des portées tronconiques 19, 20 coopérant avec les bords chanfreinés 17, 18.

L'embout selon l'invention incorpore donc un double serrage, à savoir celui résultant de l'introduction du tube interne 4 à force dans le tuyau et celui résultant du serrage de la bague biconique 8.

L'invention est applicable notamment dans les installations sanitaires ou de chauffage domestique pour raccorder les tuyaux d'eau froide ou chaude ou les conduites de chauffage, notamment en PVC réticulé.

## Revendications

1. Embout de raccordement destiné à être monté sur un tuyau de matière synthétique d'épaisseur (E), de diamètre intérieur (Di) et de diamètre extérieur (De), comportant une pièce (4) formant un tube interne (5) destiné à être introduit à l'extrémité libre (6) du tuyau (2), une bague de serrage (8) globalement cylindrique biconique destinée à être placée à l'extérieur de ladite extrémité libre (6) du tuyau (2), et un écrou rotatif (12) comportant un taraudage de raccordement femelle (13) et s'engageant à l'extérieur du tuyau (2) en chevauchant la pièce (4) et la bague de serrage (8) pour la coincer contre ladite pièce (4) et la serrer contre le tube interne (5) lors du serrage de l'écrou (12) sur un embout mâle (3) correspondant ; le tube interne (5) de la pièce (4) étant pourvu d'un filetage extérieur (9) ; la bague de serrage (8) étant en forme de manchon fermé de diamètre constant et pourvue d'un taraudage intérieur (10) correspondant audit filetage extérieur (9) ; le diamètre extérieur (dₑ) du filetage (9) du tube interne (5) étant supérieur au diamètre intérieur (Dᵢ) du tuyau (2) ; la pièce (4) comportant des moyens (11) de coopération avec un outil de vissage de la pièce (4) dans l'extrémité libre (6) du tuyau (2) serrée entre ladite bague de serrage (8) et ledit tube interne (5) ; l'écrou rotatif (12) comportant une portée cylindrique (15) coopérant, au jeu de rotation de l'écrou (12) près, avec la surface extérieure (14) cylindrique de la bague de serrage (8) et avec une surface extérieure (16) cylindrique de la pièce (4) ; la portée (15) cylindrique interne de l'écrou rotatif (12) en regard de la bague de serrage (8) et de la pièce (4) étant prolongée par le taraudage de raccordement femelle (13) qui est au diamètre normalisé minimum par rapport au diamètre du tuyau.

2. Embout selon la revendication 1 caractérisé en ce que ledit filetage extérieur (9) et ledit taraudage intérieur (10) ont des filets arrondis ou aplatis pour ne pas couper le tuyau (2).

3. Embout selon l'une quelconque des revendications 1 et 2 caractérisé en ce que la différence entre le diamètre (dᵢ) du taraudage (10) de la bague de serrage (8) et le diamètre (dₑ) du filetage (9) du tube interne (5) est inférieure à l'épaisseur (E) du tuyau à serrer (2).

4. Embout selon l'une quelconque des revendications 1 à 3 caractérisé en ce que le diamètre intérieur (dᵢ) du taraudage (10) de la bague de serrage (8) est inférieur au diamètre externe (Dₑ) du tuyau (2).

5. Embout selon l'une quelconque des revendications 1 à 4 caractérisé en ce que le diamètre intérieur du taraudage de raccordement femelle (13) est de l'ordre de 19 mm pour un tuyau de diamètre externe (Dₑ) de l'ordre de 16 mm.

6. Embout selon l'une quelconque des revendications 1 à 4 caractérisé en ce que le diamètre extérieur (dₑ) du filetage (9) du tube interne (5) est supérieur au diamètre intérieur (Dᵢ) du tuyau (2).

7. Embout selon l'une quelconque des revendications 1 à 6 caractérisé en ce que la bague de serrage (8) a ses bords (17, 18) chanfreinés du côté de l'écrou (12) et du côté de la pièce à collet (4), l'écrou (12) et la pièce à collet (4) définissant des portées tronconiques (19, 20) de forme correspondant aux et coopérant avec les bords chanfreinés (17, 18) de la bague de serrage (8) lors du serrage de l'écrou (12) sur l'embout (3) correspondant.

8. Embout selon l'une quelconque des revendications 1 à 7 caractérisé en ce que les filets (9a) voisins de l'extrémité libre (23) du tube interne (5) de la pièce à collet (4) ont un diamètre extérieur plus faible que les filets (9b) voisins de la portée (20) de la pièce à collet (4) contre laquelle la bague de serrage (8) et l'extrémité libre (6) du tuyau (2) viennent en butée.

9. Embout selon l'une quelconque des revendications 1 à 8 caractérisé en ce que lesdits moyens (11) de coopération de la pièce à collet (4) avec un outil de vissage sont constitués du fait que la surface interne (11) du tube interne (5) de la pièce à collet (4) a une section droite transversale polygonale, notamment hexagonale ou carrée, de façon à pouvoir coopérer avec un outil de vissage mâle à plusieurs pans, notamment à six ou quatre pans.

10. Procédé de montage d'un embout de raccordement selon l'une quelconque des revendications 1 à 9 caractérisé en ce que l'on visse la bague de serrage (8) autour de l'extrémité libre (6) du tuyau (2), puis on visse la pièce à collet (4) dans l'extrémité libre (6) du tuyau (2) serrée entre le tube interne (5) de la pièce à collet (4) et la bague de serrage (8).

11. Procédé selon la revendication 10 caractérisé en ce qu'on engage préalablement l'écrou rotatif (12) sur le tuyau (2).

## Patentansprüche

1. Anschlußstück zum Anbringen an einem Schlauch aus Kunststoff mit einer bestimmten Stärke (E), einem bestimmten Innendurchmesser (Dᵢ) und einem bestimmten Außendurchmesser (Dₑ), bestehend aus einem Flanschteil (4) mit einem Innenrohr (5) zum Einschieben in das freie Ende (6) des Schlauches (2), einem weitgehend zylindrischen, doppelkegelförmigen Klemmring (8), der außen an dem freien Ende (6) des Schlauches (2) angebracht wird und einer drehbaren Mutter (12) mit einem Anschlußinnengewinde (13), die außen auf dem Schlauch (2) so über das Flanschteil (4) und den Klemmring (8) aufgeschoben wird, der Klemmring (8) mit dem Flanschteil (4) verklemmt und beim Aufschrauben der Mutter (12) auf ein entsprechendes Gegenstück mit Außengewinde (3) gegen das Innenrohr (5) gepreßt wird, wobei das Innenrohr (5) des Flanschteils (4) ein Außengewinde (9) aufweist, der Klemmring (8) die Form einer geschlossenen Muffe mit gleichbleibendem Durchmesser sowie ein Innengewinde (10) besitzt, das zu dem Außengewinde (9) paßt, der Außendurchmesser (de) des Außengewindes (9) des Innenrohres (5) größer ist als der Innendurchmesser (Dᵢ) des Schlauches (2), das Flanschteil (4) Mittel (11) zum Zusammenwirken mit einem Werkzeug zum Festschrauben des Flanschteiles (4) im freien Ende (6) des zwischen dem Klemmring (8) und dem Innenrohr (5) eingeklemmten Schlauches (2) besitzt, die drehbare Mutter (12) einen Innendurchmesser (15) aufweist, der so bemessen ist, daß beim Drehen der Mutter (12) über dem Klemmring (8) und der zylindrischen Außenfläche (16) des Flanschteiles (4) ein gewisses Spiel zwischen diesen Bauteilen gewährleistet ist, der zylindrische Innendurchmesser (15) der drehbaren Mutter (12) vom Klemmring (8) und dem Flanschteil (4) aus gesehen in ein Anschlußinnengewinde (13) übergeht, dessen Durchmesser den normierten Mindestwert in Bezug auf den Durchmesser des Schlauches besitzt.

2. Anschlußstück nach Patentanspruch 1, dadurch gekennzeichnet, daß das Außengewinde (9) und das Innengewinde (10) abgerundete bzw. abgeflachte Gewindespitzen aufweisen, um Beschädigungen am Schlauch (2) zu vermeiden.

3. Anschlußstück nach Patentanspruch 1 bis 2, dadurch gekennzeichnet, daß der Unterschied zwischen dem Durchmesser (dᵢ) des Innengewindes (10) des Klemmrings (8) und dem Durchmesser (dₑ) des Äußengewindes (9) des Innenrohres (5) kleiner ist als die Stärke (E) des festzuklemmenden Schlauches (2).

4. Anschlußstück nach Patentanspruch 1 bis 3, dadurch gekennzeichnet, daß der Durchmesser (dᵢ) des Innengewindes (10) des Klemmrings (8) kleiner ist als der Außendurchmesser (Dₑ) des Schlauches (2).

5. Anschlußstück nach Patentanspruch 1 bis 4, dadurch gekennzeichnet, daß bei einem Schlauch mit einem Außendurchmesser von ca. 16 mm der Durchmesser des Anschlußinnengewindes (13) ca. 19 mm beträgt.

6. Anschlußstück nach Patentanspruch 1 bis 4, dadurch gekennzeichnet, daß der Durchmesser (dₑ) des Außengewindes (9) des Innenrohres (5) größer als der Innendurchmesser (Dᵢ) des Schlauches (2) ist.

7. Anschlußstück nach Patentanspruch 1 bis 6, dadurch gekennzeichnet, daß der Klemmring (8) zur Mutter (12) und zum Flanschteil (4) hin abgefaste Seitenwände (17, 18) aufweist, wobei die Mutter (12) und das Flanschteil (4) kegelstumpfförmige Anschlußflächen (10, 20) bilden, deren Form der der abgefasten Seitenwände (17, 18) des Klemmrings (8) entspricht und beim Aufschrauben der Mutter (12) auf das Gegenstück (3) mit diesen Flächen zusammenwirkt.

8. Anschlußstück nach Patentanspruch 1 bis 7, dadurch gekennzeichnet, daß die Gewinde (9a) neben dem freien Ende (23) des Innenrohres (5) des Flanschteils (4) einen kleineren Außendurchmesser als die Gewinde (9b) neben der Fläche (20) des Flanschteils (4) aufweisen, an die der Klemmring (8) und das freie Ende (6) des Schlauches (2) angepreßt werden.

9. Anschlußstück nach Patentanspruch 1 bis 8, dadurch gekennzeichnet, daß die Mittel (11) zum Zusammenwirken mit dem Flanschteil (4) mit Hilfe eines Werkzeugs zum Festschrauben so gestaltet sind, daß die Innenfläche (11) des Innenrohres (5) des Flanschteils (4) einen mehreckigen, insbesondere sechseckigen oder viereckigen Querschnitt aufweist, sodaß sie mit einem einsteckbaren Mehrkantwerkzeug zum Festschrauben, insbesondere einem Innensechskant- oder Innenvierkantschlüssel zusammenwirkt.

10. Anschlußstück nach Patentanspruch 1 bis 9, dadurch gekennzeichnet, daß der Klemmring (8) auf das freie Ende (6) des Schlauches (2) aufgeschraubt wird und danach das Flanschteil (4) in das freie Ende (6) des Schlauches (2) eingeschraubt wird, wobei der Schlauch (2) zwischen dem Innenrohr (5) des Flanschteils (4) und dem Klemmring (8) eingespannt wird.

11. Anschlußstück nach Patentanspruch 10, dadurch gekennzeichnet, daß die drehbare Mutter (12) zuvor auf den Schlauch (2) aufgeschoben wird.

## Claims

1. Connecting joining piece intended to be mounted on a pipe made of a synthetic material with a thickness (E), an internal diameter (Di) and an external diameter (De), comprising an element (4) forming an internal tube (5) intended to be introduced at the free extremity of the pipe (2), a generally biconical cylindrical clamping ring (8) intended to be placed outside said free extremity (6) of the pipe (2), and a rotary nut (12) comprising a female connecting threading (13) and being engaged outside the pipe (2) overlapping the element (4) and the clamping ring (8) so as to jam against said element (4) and clamp it against the internal tube (5) when the nut (12) is tightened on a corresponding male joining piece (3), the internal tube (5) of the element (4) being provided with an external thread (9), the clamping ring (8) having the shape of a closed sleeve with a constant diameter and provided with an internal threading (10) corresponding to said external thread (9), the external diameter (De) of the thread (9) of the internal tube (5) being larger than the internal diameter (Di) of the pipe (2), the element (4) comprising means (11) for cooperating with a tool for screwing the element (4) into the free extremity (6) of the pipe (2) clamped between said clamping ring (8) and said internal tube (5), the rotary nut (11) comprising a cylindrical bearing (15) cooperating at the approximate rotation play of the nut (12) with the external cylindrical surface (14) of the clamping ring (8) and with an external cylindrical surface (16) of the element (4), the internal cylindrical bearing (15) of the rotary nut (12) opposite the clamping ring (8) and the element (4) being extended by the female connecting threading (13) which has the minimum standardized diameter with respect to the diameter of the pipe.

2. Joining piece according to claim 1, wherein said external thread (9) and said internal threading (10) have rounded or flattened threads to avoid cutting the pipe (2).

3. Joining piece according to claim 1 or 2, wherein the difference between the diameter (di) of the threading (10) of the clamping ring (8) and the diameter (de) of the thread (9) of the intetrnal tube (5) is smaller than the thickness (E) of the tube (2) to be clamped.

4. Joining piece according to any one of claims 1 to 3, wherein the internal diameter (di) of the threading (10) of the clamping ring (8) is smaller than the external diameter (De) of the pipe (2).

5. Joining piece according to any one of claims 1 to 4, wherein the internal diameter of the female connecting threading (13) is about 19 mm for a pipe with an external diameter (De) of about 16 mm.

6. Joining piece according to any one of claims 1 to 4, wherein the external diameter (de) of the thread (9) of the internal tube (5) is larger than the internal diameter (Di) of the pipe (2).

7. Joining piece according to any one of claims 1 to 6, wherein the clamping ring (8) has its edges (17,18) bevelled on the side of the nut (12) and on the side of the flange element (4), the nut (12) and the flange element (4) defining truncated bearings (10, 20) with a shape corresponding to and cooperating with the bevelled edges (17, 18) of the clamping ring (8) when the nut (12) is tightened on the corresponding joining piece (3).

8. Joining piece according to any one of claims 1 to 7, wherein the adjacent threads (9a) of the free extremity (23) of the internal tube (5) of the flange element (4) possess an external diameter smaller than the adjacent threads (9b) of the bearing (20) of the flange element (4) against which the clamping ring (8) and the free extremity (6) of the pipe (2) abut.

9. Joining piece according to anyone of claims 1 to 8, wherein said means (11) allowing for cooperation of the flange element (4) with a screwing tool are established due to the fact that the internal surface (11) of the internal tube (5) of the flange element (4) has a polygonal transverse cross section, especially hexagonal or square, so as to be able to cooperate with a male screwing tool with several side face flat surfaces, especially six or four.

10. Method for mounting a connecting joining piece according to any one of claims 1 to 9, wherein the clamping ring (8) is screwed around the free extremity (6) of the pipe (2) and the flange element (4) is screwed into the free extremity (6) of the pipe (2) clamped between the internal tube (5) of the flange element (4) and the clamping ring (8).

11. Method according to claim 10, wherein the rotary nut (12) is previously engaged on the pipe (2).
